# EUROPEAN PATENT APPLICATION

(11) **EP 4 329 047 A2**
(43) Date of publication of application: **28.02.2024**
(21) Application number: 23190392.3
(22) Date of filing: 08.08.2023
(51) Int. Cl.: H01M 10/613, H01M 10/6556, H01M 10/6567, H01M 50/204, H01M 10/48

(54) **BATTERY MODULE AND ENERGY STORAGE SYSTEM**

(30) Priority: 23.08.2022 CN 202211012538
(71) Applicant: Huawei Digital Power Technologies Co., Ltd., Shenzhen, Guangdong 518043 (CN); University of Science and Technology of China, Anhui 230026 (CN)
(72) Inventor: CHEN, Lei, Shenzhen, 518043 (CN); CHENG, Cong, Shenzhen, 518043 (CN); XIE, Jie, Shenzhen, 518043 (CN); XIONG, Cheng, Shenzhen, 518043 (CN); JIA, Zhuangzhuang, Hefei, 230026 (CN); WANG, Qingsong, Hefei, 230026 (CN); MEI, Wenxin, Hefei, 230026 (CN)
(74) Representative: Gill Jennings & Every LLP

(57) **Abstract**

This application discloses a battery module and an energy storage system. The battery module comprises a plurality of battery cells (302) and a battery box (301), the plurality of battery cells (302) are separately disposed in a plurality of battery cell slots of the battery box (301); wherein the battery box (301) includes a controller, a first sensor (305), and a spraying apparatus (304) and an extinguishing agent pipeline (303) that are located above a battery module. The controller is electrically connected to the first sensor (305) and the spraying apparatus (304). The spraying apparatus (304) is connected to the extinguishing agent pipeline (303). The first sensor (305) is configured to detect a temperature of the battery box (301), and send a first electrical signal to the controller. The controller is configured to control the spraying apparatus (304) to spray an extinguishing agent to the battery module. According to the solution of this application, when thermal runaway occurs in the battery box (301), and the temperature exceeds a set threshold, a fire may be extinguished in time, to avoid spreading of the fire and reduce a loss. In addition, the spraying apparatus (304) for spraying the extinguishing agent is located above the battery module, so that the fire may be extinguished effectively for the battery module.

## Description

### TECHNICAL FIELD

This application relates to the field of energy storage technologies, and in particular, to a battery box, a battery module, an energy storage system, and an electric vehicle.

### BACKGROUND

Lithium-ion batteries are widely used in various major energy storage systems due to advantages of the lithium-ion batteries such as cleanness, a large quantity of cycles, and no memory effect. However, the lithium-ion batteries are prone to accidents. Once an accident occurs in an energy storage system, an inestimable loss is caused. Thermal runaway is likely to occur in the lithium-ion battery in cases of thermal abuse, mechanical abuse, and electric abuse. However, a module usually includes a plurality of battery cells, and the entire energy storage system includes a larger quantity of batteries. In a box, if thermal runaway of a battery cell is not suppressed, the thermal runaway may be propagated in the module, causing a great loss.

Currently, a battery fire extinguishing technology generally uses water to extinguish a fire. However, fire extinguishing effect is not good, and a battery without thermal runaway may be short-circuited, causing other dangers.

Based on this, how to perform emergency treatment when thermal runaway occurs in a battery box is an urgent problem to be resolved.

### SUMMARY

This application provides a battery box, a battery module, an energy storage system, and an electric vehicle, to perform treatment in time when thermal runaway occurs in the battery box.

A first aspect provides a battery box (301), including a controller, a first sensor (305), and a spraying apparatus (304) and an extinguishing agent pipeline (303) that are located above a battery module. The controller is electrically connected to the first sensor (305) and the spraying apparatus (304). The spraying apparatus (304) is connected to the extinguishing agent pipeline (303). The first sensor (305) is configured to detect a temperature of the battery box (301), and send a first electrical signal to the controller. The controller is configured to: when determining, based on the first electrical signal, that the temperature of the battery box (301) is greater than or equal to a first set threshold, control the spraying apparatus (304) to spray an extinguishing agent to the battery module.

In this aspect, when thermal runaway occurs in the battery box, and the temperature exceeds the set threshold, a fire may be extinguished in time, to avoid spreading of the fire and reduce a loss. In addition, the spraying apparatus for spraying the extinguishing agent is located above the battery module, so that the fire may be extinguished effectively for the battery module.

In a possible implementation, the first sensor (305) is located above the battery module, and is configured to detect a temperature at a top of the battery box (301).

In this implementation, the first sensor may be a temperature sensor.

Generally, when the fire occurs inside the battery box, the temperature at the top of the battery box is high. Therefore, disposing the first sensor above the battery module, that is, the top of the battery box, may accurately detect the temperature of the battery box.

In another possible implementation, the battery module includes a plurality of battery cells (302). The battery box (301) further includes a second sensor (306) connected to the controller. The second sensor (306) is configured to send a second electrical signal to the controller when detecting impact force generated by a flammable gas ejected when an explosion-proof valve (111) of at least one battery cell (302) in the battery module is opened. The controller is further configured to determine, based on the second electrical signal, that thermal runaway occurs in the at least one battery cell in the battery module.

In this implementation, when thermal runaway occurs in the battery module, an explosion-proof valve on the battery cell in the battery module is opened, and the flammable gas ejected from the explosion-proof valve generates specific impact force. When detecting the impact force, the second sensor may report the impact force to the controller. Therefore, it may be detected in time that thermal runaway occurs in the battery module.

In still another possible implementation, the second sensor (306) is a piezoelectric ceramic piece.

In still another possible implementation, the extinguishing agent includes at least one of the following: heptafluoropropane and perfluorohexanone.

In this implementation, the extinguishing agent may be heptafluoropropane, which is a dry extinguishing agent, so that a further loss of the battery module may be avoided.

A second aspect provides a battery box (501), including a liquid cooling apparatus located at a bottom of a battery module. The liquid cooling apparatus includes a liquid cooling plate (505). A liquid cooling pipeline (503) configured to accommodate a coolant is disposed in the liquid cooling plate (505). A liquid inlet and a liquid outlet that are connected to the liquid cooling pipeline (503) are disposed on an outer wall of the liquid cooling plate (505). A plurality of high-temperature automatic cracking holes (506) are disposed on the liquid cooling pipeline (503). When a surface temperature of the liquid cooling plate (505) is greater than or equal to a first set threshold, the high-temperature automatic cracking hole (506) sprays the coolant to the battery module.

In this aspect, when thermal runaway occurs in the battery box, and consequently the surface temperature of the liquid cooling plate exceeds the set threshold, the high-temperature automatic cracking hole on the liquid cooling pipeline automatically cracks at a high temperature, and the coolant in the liquid cooling pipeline is sprayed from the high-temperature automatic cracking hole to the battery module. Therefore, the battery module may be cooled in time to suppress a thermal runaway process and prevent the battery module from reburning, and a flame may be suppressed to some extent.

In a possible implementation, the battery module includes a plurality of battery cells (502). The plurality of battery cells (502) are located on an upper surface of the liquid cooling plate (505). A projection, in a thickness direction of the liquid cooling plate (505), of at least a part of the liquid cooling pipeline (503) on a surface of the liquid cooling plate (505) facing the plurality of battery cells (502) is located outside a region occupied by the plurality of battery cells (502) on the surface of the liquid cooling plate (505). The coolant flows in from the liquid inlet of the liquid cooling pipeline (503), and flows out from the liquid outlet of the liquid cooling pipeline (503).

In this implementation, when thermal runaway does not occur in the battery box, the liquid cooling apparatus may cool the battery module.

The liquid cooling plate includes the liquid cooling pipeline. The projection, in the thickness direction of the liquid cooling plate, of at least a part of the liquid cooling pipeline on the surface of the liquid cooling plate facing the plurality of battery cells may be located in the region occupied by the plurality of battery cells on the surface of the liquid cooling plate. Alternatively, the projection, in the thickness direction of the liquid cooling plate, of at least a part of the liquid cooling pipeline on the surface of the liquid cooling plate facing the plurality of battery cells may be located outside the region occupied by the plurality of battery cells on the surface of the liquid cooling plate.

In another possible implementation, the coolant is perfluorohexanone.

In still another possible implementation, the battery box (501) further includes a controller, a first sensor, and a spraying apparatus (507) and an extinguishing agent pipeline (504) that are located above the battery module. The controller is electrically connected to the first sensor and the spraying apparatus (507). The spraying apparatus (507) is connected to the extinguishing agent pipeline (504). The first sensor is configured to detect a temperature of the battery box (501), and send a first electrical signal to the controller. The controller is configured to: when determining, based on the first electrical signal, that the temperature of the battery box (501) is greater than or equal to a second set threshold, control the spraying apparatus (507) to spray an extinguishing agent to the battery module.

In this aspect, the spraying apparatus may further be disposed above the battery module. When thermal runaway occurs in the battery box, and the temperature exceeds the set threshold, the spraying apparatus may spray the extinguishing agent to extinguish a fire in time, to avoid spreading of the fire and reduce a loss. In addition, the spraying apparatus for spraying the extinguishing agent is located above the battery module, so that the fire may be extinguished effectively for the battery module.

In still another possible implementation, the first sensor is located above the battery module, and is configured to detect a temperature at a top of the battery box (501).

In this implementation, the first sensor may be a temperature sensor.

Generally, when the fire occurs inside the battery box, the temperature at the top of the battery box is high. Therefore, disposing the first sensor above the battery module, that is, the top of the battery box, may accurately detect the temperature of the battery box.

In still another possible implementation, the battery module includes the plurality of battery cells (502). The battery box (501) further includes a second sensor connected to the controller. The second sensor is configured to send a second electrical signal to the controller when detecting impact force generated by a flammable gas ejected when an explosion-proof valve (111) of at least one battery cell (502) in the battery module is opened. The controller is further configured to determine, based on the second electrical signal, that thermal runaway occurs in the at least one battery cell in the battery module.

In this implementation, when thermal runaway occurs in the battery module, an explosion-proof valve on the battery cell in the battery module is opened, and the flammable gas ejected from the explosion-proof valve generates specific impact force. When detecting the impact force, the second sensor may report the impact force to the controller. Therefore, it may be detected in time that thermal runaway occurs in the battery module.

In still another possible implementation, the second sensor is a piezoelectric ceramic piece.

In still another possible implementation, the extinguishing agent includes at least one of the following: heptafluoropropane and perfluorohexanone.

In this implementation, the extinguishing agent may be heptafluoropropane, which is a dry extinguishing agent, so that a further loss of the battery module may be avoided.

A third aspect provides a battery module, including a plurality of battery cells and the battery box according to the first aspect, the second aspect, or any implementation in the first aspect and the second aspect. The plurality of battery cells are separately disposed in a plurality of battery cell slots of the battery box.

A fourth aspect provides an energy storage system, including a converter and at least one battery module according to the third aspect. The converter is connected to the battery module, and is configured to convert a current input to the battery module or a current output from the battery module.

A fifth aspect provides an electric vehicle, including a motor, wheels, and the energy storage system according to the fourth aspect that is electrically connected to the motor. The energy storage system is configured to provide electric energy to the motor

### BRIEF DESCRIPTION OF DRAWINGS

FIG. 1 is a schematic diagram of a structure of a battery module according to an embodiment of this application;
FIG. 2 is a main sectional view of a battery cell according to an embodiment of this application;
FIG. 3 is a front view of a battery box according to an embodiment of this application;
FIG. 4 is a top view of the battery box shown in FIG. 3;
FIG. 5 is a front view of another battery box according to an embodiment of this application;
FIG. 6 is a left view of the battery box shown in FIG. 5; and
FIG. 7 is a partial schematic diagram of a bottom of the battery box shown in FIG. 5.

### Description of reference signs:

1: battery module; 11: battery cell; 111: explosion-proof valve; 112: housing; 113: electrode assembly; 114: top cover assembly; 301: battery box; 302: battery cell; 303: extinguishing agent pipeline; 304: spraying apparatus; 305: first sensor; 306: second sensor; 501: battery box; 502: battery cell; 503: liquid cooling pipeline; 504: extinguishing agent pipeline; 505: liquid cooling plate; 506: high-temperature automatic cracking hole; 507: spraying apparatus.

### DESCRIPTION OF EMBODIMENTS

In recent years, with the improvement of people's living standards and environmental protection awareness, people have realized that energy is a very important issue. For energy and environment considerations, electric vehicles have been developed rapidly with the help of governments and automobile manufacturers around the world. Pure electric vehicle is an important development direction of electric vehicles because of its true "zero emission". Lithium-ion battery has become an ideal power source for new generation electric vehicles due to excellent performance of the lithium-ion battery. The lithium-ion battery features a light weight, a large energy storage, high power, no pollution, no secondary pollution, a long service life, a small self-discharge coefficient, and a wide temperature adaptation range, and is an ideal vehicular storage battery for electric bicycles, electric motorcycles, electric cars, electric trucks, and the like.

Lithium-ion batteries are widely used in products such as household energy storage, a communication base station, a data center, industrial and commercial energy storage, consumer electronics, and a vehicle due to features of the lithium-ion batteries such as a high energy density, the long service life, a low self-discharge rate, and no memory effect. However, safety accidents of lithium-ion batteries are often reported, and safety problems of lithium-ion batteries seriously threaten the life and property safety of users.

For the problem in the background that emergency treatment cannot be performed in a timely, effective, and appropriate manner when thermal runaway occurs in a battery box, this application provides a battery box, a battery module, an energy storage system, and an electric vehicle.

A battery box provided in an embodiment of this application includes a controller, a first sensor, and a spraying apparatus and an extinguishing agent pipeline that are located above a battery module. The controller is electrically connected to the first sensor and the spraying apparatus. The spraying apparatus is connected to the extinguishing agent pipeline. The first sensor is configured to detect a temperature of the battery box, and send a first electrical signal to the controller. The controller is configured to: when determining, based on the first electrical signal, that the temperature of the battery box is greater than or equal to a first set threshold, control the spraying apparatus to spray an extinguishing agent to the battery module. According to the solution of this embodiment of this application, when thermal runaway occurs in the battery box, and the temperature exceeds the set threshold, a fire may be extinguished in time, to avoid spreading of the fire and reduce a loss. In addition, the spraying apparatus for spraying the extinguishing agent is located above the battery module, so that the fire may be extinguished effectively for the battery module.

Another battery box provided in an embodiment of this application includes a liquid cooling apparatus located at a bottom of a battery module. The liquid cooling apparatus includes a liquid cooling plate. A liquid cooling pipeline configured to accommodate a coolant is disposed in the liquid cooling plate. A liquid inlet and a liquid outlet that are connected to the liquid cooling pipeline are disposed on an outer wall of the liquid cooling plate. A plurality of high-temperature automatic cracking holes are disposed on the liquid cooling pipeline. When a surface temperature of the liquid cooling plate is greater than or equal to a first set threshold, the high-temperature automatic cracking hole sprays the coolant to the battery module. According to the solution of this embodiment of this application, when thermal runaway occurs in the battery box, and consequently the surface temperature of the liquid cooling plate exceeds the set threshold, the high-temperature automatic cracking hole on the liquid cooling pipeline automatically cracks at a high temperature, and the coolant in the liquid cooling pipeline is sprayed from the high-temperature automatic cracking hole to the battery module. Therefore, the battery module may be cooled in time to suppress a thermal runaway process and prevent the battery module from reburning, and a flame may be suppressed to some extent.

The following describes implementations of this application by using specific embodiments. A person skilled in the art may easily learn other advantages and effects of this application based on content disclosed in this specification. Although this application is described with reference to a preferred embodiment, it does not mean that a feature of this application is limited only to this implementation. On the contrary, a purpose of describing this application with reference to this implementation is to cover another option or modification that may be derived based on claims of this application. The following descriptions include a plurality of specific details, to provide an in-depth understanding of this application. This application may be alternatively implemented without using these details. In addition, some specific details are omitted from the description, to avoid confusion or blurring of a focus of this application. It should be noted that embodiments in this application and features in embodiments may be mutually combined in the case of no conflict.

The following terms "first", "second", and the like, if used, are merely intended for a purpose of description, and shall not be understood as an indication or implication of relative importance or an implicit indication of a quantity of indicated technical features. Therefore, a feature limited by "first", "second", and the like may explicitly or implicitly include one or more such features. In the descriptions of this application, unless otherwise stated, "a plurality of means two or more. Orientation terms such as "up", "down", "left", and "right" are defined with respect to orientations of components schematically placed in the accompanying drawings. It should be understood that these orientation terms are relative concepts, and are used for relative description and clarification. These orientation terms may vary accordingly depending on the orientations in which the components are placed in the accompanying drawings.

In this application, that a structure is roughly in a specific shape means that the structure is generally in the shape from a macro perspective, and may be partially adjusted. If the shape is approximately square, it may be understood that a shape in which one side is an arc rather than a straight line is also included. That a feature is approximately coaxial with another feature may be understood as that a distance between axes of the two features does not exceed 20% of a size of any feature perpendicular to the axis.

In this application, unless otherwise expressly specified and limited, the term "connection", if used, should be understood in a broad sense. For example, the "connection" may be a fixed connection, a detachable connection, or an integrated connection, or may be a direct connection or an indirect connection through an intermediate medium. The term "and/or" used in this specification includes any and all combinations of one or more related listed items.

When the following embodiments are described in detail with reference to schematic diagrams, for ease of description, a diagram depicting a partial structure of a component is partially enlarged not based on a general scale. In addition, the schematic diagrams are merely examples, and should not limit the protection scope of this application herein.

To make the objectives, technical solutions, and advantages of this application clearer, the following further describes implementations of this application in detail with reference to the accompanying drawings.

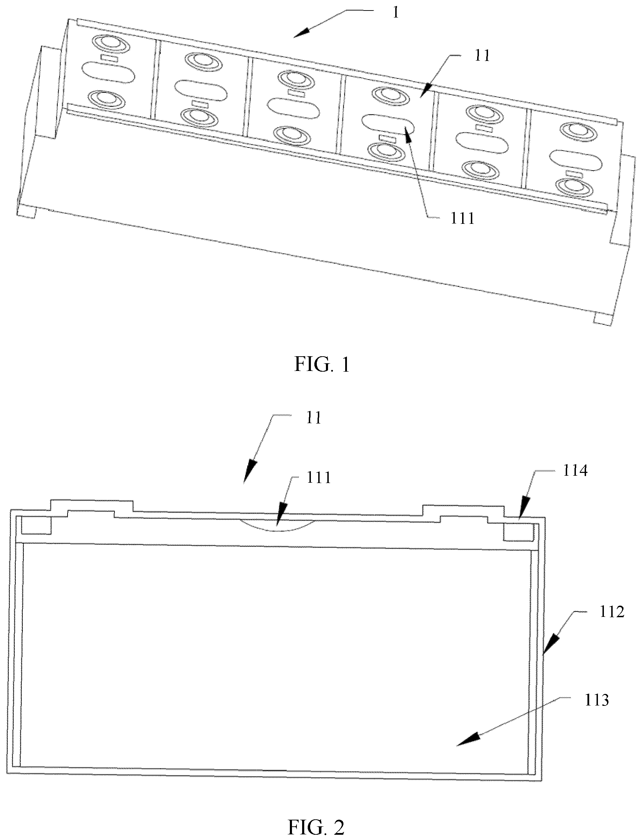

FIG. 1 is a schematic diagram of a structure of a battery module according to an embodiment of this application. The battery module 1 includes battery cells 11. Shapes of the plurality of battery cells 11 may be the same. The plurality of battery cells 11 may be connected in series or in parallel. The battery cells 11 in the battery module 1 may be arranged in a stacked manner, for example, sequentially stacked. Further, side panels may be further placed on two sides of the battery cell 11, so that the battery cells 11 are arranged neatly, and mechanical strength of the module in a stacking direction of the battery cells 11 is ensured. A bottom plate may be placed at the bottom of the battery cell 11, so as to support the battery cell 11. In addition, a battery module fastening apparatus may be further mounted at the bottom of the battery cell 11 to fasten at least one battery module 1 to the bottom plate. A pre-tightening force is applied to an end plate of the battery module 1 to press the battery cells. The pre-tightening force is maintained for connection to the side panel and the bottom plate. A connection mode may be riveting, welding, or the like. A top cover plate at the top of the battery module 1 seals a connection cable of the module.

The module may be assembled on an upper part of a tray by using one or more insulated cavities. A plurality of electrochemical cells (electrochemical cells) may be accommodated by using a plurality of electrochemical cell slots inside the insulated cavity. The plurality of electrochemical cells may be connected in series and in parallel by using a conductive bar between a wall-through conductive column and the electrochemical cell slot, thereby implementing high-capacity and high-voltage configuration of the module, making full use of space of the module, simplifying a production process, improving energy density, and reducing manufacturing costs.

An explosion-proof valve 111 may be further disposed on at least one battery cell 11. During storage and use of the battery cell 11, a positive electrode and a negative electrode may keep undergoing negative reactions with an electrolyte, to generate a gas. Therefore, with continuous accumulation of the gas inside the battery cell 11, when internal pressure of the battery cell 11 reaches a threshold, the explosion-proof valve 111 is opened to generate a crack on a surface of a cavity to release the gas in the cavity, so as to reduce a risk of cracking the battery cavity.

The battery module may further include a battery management unit (battery management unit, BMU) (not shown in the figure), which may also be referred to as a battery nanny or a battery manager. The BMU is configured to manage a plurality of battery modules 1 of a battery pack, to prevent overcharge and overdischarge of the battery cell 11, prolong a service life of the battery cell 11, and monitor a status of the battery cell 11.

In this embodiment, the battery cell 11 may be a lithium-ion battery, a lead-acid battery, a nickel-cadmium battery, a nickel-hydrogen battery, or the like.

FIG. 2 is a main sectional view of the battery cell according to an embodiment of this application. The battery cell 11 includes a housing 112 and an electrode assembly 113, and may further include a top cover assembly 114.

The housing 112 may be in a hexahedral shape or another shape. A shape of the housing 112 is not limited in this application. In addition, a housing 112 of each battery cell 11 may be in a same shape or different shapes. The housing 112 has internal space for accommodating the electrode assembly 113 and the electrolyte. The housing 112 may be made of a material such as aluminum, an aluminum alloy, or plastic.

The electrode assembly 113 may be formed by winding a positive electrode plate, a negative electrode plate, and a diaphragm in a spiral manner around a winding axis. The diaphragm is an insulator between the positive electrode plate and the negative electrode plate. The electrode assembly 113 outputs electric energy after reacting with the electrolyte.

The top cover assembly 114 covers an opening of the housing 112.

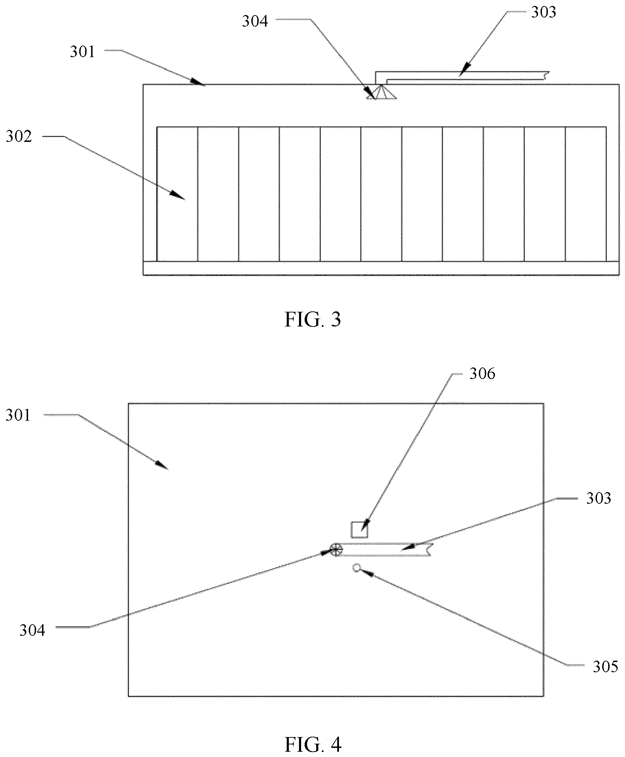

Refer to FIG. 3 and FIG. 4. FIG. 3 is a front view of a battery box according to an embodiment of this application. FIG. 4 is a top view of the battery box shown in FIG. 3. The battery box is used to store and mount a battery module. As clean energy, a battery is widely used in various fields. However, if the battery is used improperly, it is easy to catch a fire. Therefore, an extinguishing apparatus is disposed in the battery box used to mount the battery module.

A lithium-ion battery is a secondary rechargeable battery, and implements energy storage and release through a series of complex chemical reactions and physical structure changes. Therefore, a large amount of heat is generated during energy storage and release, which brings a potential threat to safety of the lithium-ion battery. For a power battery module, heat dissipation treatment is essential.

The battery box 301 includes a controller, a first sensor 305, and a spraying apparatus 304 and an extinguishing agent pipeline 303 that are located above the battery module. As described above, the battery module may include a plurality of battery cells 302. The controller is electrically connected to the first sensor 305 and the spraying apparatus 304. The spraying apparatus 304 is connected to one end of the extinguishing agent pipeline 303. For example, the other end of the extinguishing agent pipeline 303 is further connected to an apparatus for storing an extinguishing agent. The extinguishing agent pipeline 303 may deliver, to the spraying apparatus 304, the extinguishing agent from the apparatus for storing the extinguishing agent. For example, the spraying apparatus 304 may be in any shape such as an umbrella-shaped nozzle. A shape of the spraying apparatus 304 is not limited in this embodiment of this application.

When thermal runaway occurs in the battery box 301, the foregoing explosion-proof valve 111 is opened, and a large amount of flammable gas is ejected from a cavity of the battery cell 302, causing a temperature rise inside the battery box 301. The first sensor 305 is configured to detect a temperature of the battery box 301, and send a first electrical signal to the controller. For example, the first sensor 305 is located above the battery module, and is configured to detect a temperature at a top of the battery box 301. Generally, when a fire occurs inside the battery box, the temperature at the top of the battery box is high. Therefore, disposing the first sensor above the battery module, that is, the top of the battery box, may accurately detect the temperature of the battery box. The first sensor 305 may be, for example, a temperature sensor.

The controller is configured to: when determining, based on the first electrical signal, that the temperature of the battery box 301 is greater than or equal to a first set threshold, control the spraying apparatus 304 to spray the extinguishing agent to the battery module. The first set threshold may be determined based on an empirical value, an experimental value, or the like. For example, when the first sensor 305 detects that the temperature inside the battery box 301 or at the top of the battery box 301 reaches 400°C, the first sensor 305 sends the first electrical signal to the controller, and the controller may determine that a fire occurs inside the battery box 301. Therefore, the controller controls the spraying apparatus 304 to start to spray the extinguishing agent in the extinguishing agent pipeline 303 to the battery module to extinguish the fire.

For example, a flame detection sensor and a driving apparatus may be further disposed at the top of the battery box 301. The flame detection sensor may be an infrared flame sensor, an ultraviolet flame sensor, an infrared and ultraviolet hybrid flame sensor, or the like. The flame detection sensor is disposed on a posture adjustment base. A drive motor may drive a monitoring angle of the flame detection sensor to be adjusted. For example, the monitoring angle of the flame detection sensor may be 30° to 180°. The flame detection sensor is usually mounted at a middle position or another vacant position at the top of the battery box 301.

For example, the spraying apparatus 304 may also be disposed on a posture adjustment base. A drive motor may drive an angle of the spraying apparatus 304 to be adjusted, so that the spraying apparatus 304 sprays the extinguishing agent to the battery cell 302 in which a fire occurs.

It can be learned that when the temperature inside the battery box 301 exceeds the first set threshold, the fire may be extinguished in time, to avoid spreading of the fire and reduce a loss. In addition, the spraying apparatus 304 for spraying the extinguishing agent is located above the battery module, so that the fire may be extinguished effectively for the battery module.

In addition, as a chemical energy storage component, the lithium-ion battery includes a positive electrode made of a lithium-containing compound and a negative electrode made of a lithium-embedded graphite, both of which are immersed in a lithium-containing organic solvent. During storage and use, the positive electrode and the negative electrode may keep undergoing negative reactions with an electrolyte, to generate a gas. In addition, each component of the lithium-ion battery easily reacts with water and deteriorates. Therefore, there is a sealed cavity that isolates water inside the lithium-ion battery. Therefore, with continuous accumulation of the gas inside the lithium-ion battery, an internal interface of the lithium-ion battery and the cavity that accommodates the lithium-ion electrode deform, and finally the cavity of the lithium-ion battery may be cracked. In order to alleviate the problem caused by deformation of the cavity of the lithium-ion battery, a pressure relief opening may be disposed on a surface of the lithium-ion battery, which is referred to as an explosion-proof valve in the industry. After internal pressure of the lithium-ion battery reaches a threshold, the explosion-proof valve is opened to generate a crack on a surface of the cavity to release the gas in the cavity, so as to reduce a risk of cracking the cavity of the lithium-ion battery.

The explosion-proof valve is usually opened at the end of life of the lithium-ion battery or when an abnormal reaction occurs inside the battery. After the explosion-proof valve is opened, the negative electrode and the electrolyte of the lithium-ion battery react with water in an external environment, the electrolyte deteriorates, and the positive electrode is oxidized. This process is accompanied by heat. Therefore, after the explosion-proof valve is opened, the lithium-ion battery has a specific potential safety hazard.

Further, the battery box 301 may further include a second sensor 306 connected to the controller. The second sensor 306 is configured to send a second electrical signal to the controller when detecting impact force generated by the flammable gas ejected when an explosion-proof valve 111 of at least one battery cell 302 in the battery module is opened. For example, the second sensor 306 may be a piezoelectric ceramic piece.

The controller is further configured to determine, based on the second electrical signal, that thermal runaway occurs in the at least one battery cell in the battery module. Therefore, when thermal runaway occurs in the battery module, the explosion-proof valve on the battery cell in the battery module is opened, and the flammable gas ejected from the explosion-proof valve generates specific impact force. When detecting the impact force, the second sensor may report the impact force to the controller. Therefore, it may be detected in time that thermal runaway occurs in the battery module.

For example, the battery module includes totally 10 battery cells. The second sensor 306 detects that the flammable gas above a fourth battery cell and a fifth battery cell generates strong impact force, and sends the second electrical signal to the controller. The controller may determine, based on the second electrical signal, that thermal runaway occurs in a battery cell in the battery module or that thermal runaway occurs in the fourth battery cell and/or the fifth battery cell in the battery module.

For example, the extinguishing agent may include at least one of the following: heptafluoropropane and perfluorohexanone. The heptafluoropropane is a dry extinguishing agent, so that a further loss of the battery module may be avoided. The perfluorohexanone is a liquid coolant capable of quickly reducing a temperature inside the battery box. A type of the used extinguishing agent is not limited in this embodiment of this application.

For example, the controller may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The above uses a thermal runaway scenario as an example for description. This solution may also be applied to any battery module fault scenario. One or more of the following faults occur in an electrochemical cell of one or more batteries in the battery module: overheating of the electrochemical cell (for example, a temperature of the electrochemical cell exceeds a set temperature), excessively fast temperature rise of the electrochemical cell (for example, a speed at which the temperature of the electrochemical cell rises exceeds a set speed), a voltage drop (for example, a voltage of the electrochemical cell is lower than a set voltage), and a voltage outlier (for example, a voltage of an electrochemical cell of any one or more batteries in the battery module is lower than an average voltage of the one or more batteries in the battery module). It may be considered that one or more batteries in the battery module are faulty.

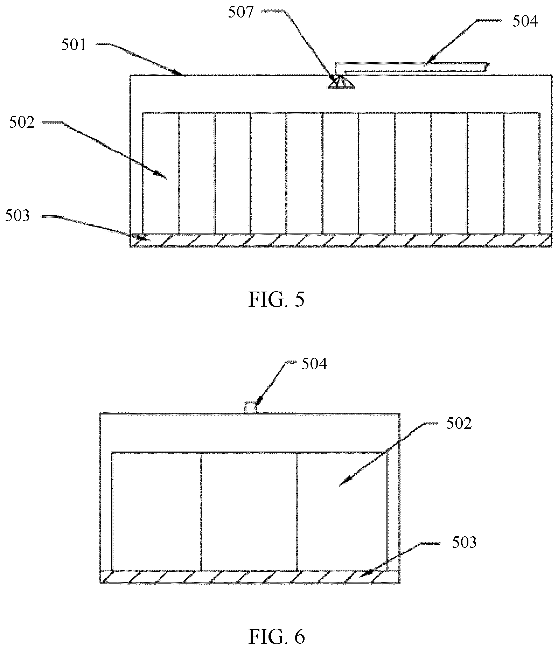

Refer to FIG. 5 and FIG. 6. FIG. 5 is a front view of another battery box according to an embodiment of this application. FIG. 6 is a left view of the battery box shown in FIG. 5. An embodiment of this application also provides a battery box 501. The battery box 501 includes a liquid cooling apparatus located at a bottom of a battery module. The battery module includes a plurality of battery cells 502.

A principle of the liquid cooling apparatus is taking away heat of the battery box through cold and heat exchange. The liquid cooling apparatus is classified into a cold plate liquid cooling apparatus and a fully immersed liquid cooling apparatus in terms of a physical form.

In a cold plate liquid cooling technology, a coolant (which may also be referred to as a working medium, a working fluid, a refrigerant, or the like) is used as an intermediate heat transfer medium, and heat is transferred from a hot region to a remote place for cooling. In this technology, the coolant is separated from a cooled object, the coolant does not directly contact an electronic component, and instead, heat of the cooled object is transferred to the refrigerant by using an efficient heat conduction component such as a liquid cooling plate. Therefore, the cold plate liquid cooling technology is also referred to as an indirect liquid cooling technology. In this technology, the coolant is directly led to a heat source. In addition, because liquid has greater specific heat and a higher heat dissipation speed than air, cooling efficiency of liquid is much higher than that of air, and heat transferred by each unit volume, that is, heat dissipation efficiency, is 1000 times that of air cooling. This may effectively solve a heat dissipation problem of a high-density server, reduce power consumption of a cooling system, and reduce noise.

An immersion phase-change liquid cooling technology means that in an immersion phase-change liquid cooling system, a component that generates a large amount of heat, for example, the battery module, is totally immersed in the coolant. In a working state, the battery module generates heat, causing a temperature rise of the coolant. When a temperature of the coolant rises to a boiling point corresponding to system pressure, the coolant changes in phase from a liquid state to a gas state, and heat is absorbed through heat vaporization, to implement heat transfer. This technology of absorbing heat for cooling by using the coolant is a phase-change liquid cooling technology. According to the immersion phase-change liquid cooling technology, heat is directly taken away through a liquid phase change, reducing thermal resistance during heat transfer. Compared with cold plate liquid cooling, the immersion phase-change liquid cooling technology has higher heat transfer efficiency, and is the most energy-saving and efficient new cooling mode in liquid cooling.

In this embodiment, the cold plate liquid cooling technology is used as an example for description.

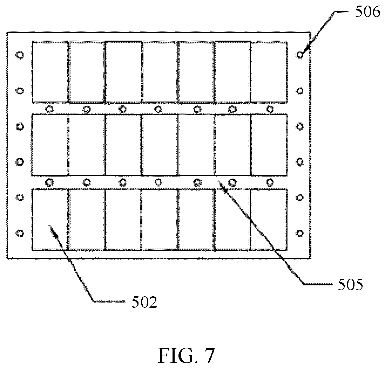

FIG. 7 is a partial schematic diagram of the bottom of the battery box shown in FIG. 5. The liquid cooling apparatus includes a liquid cooling plate 505. A liquid cooling pipeline 503 configured to accommodate the coolant is disposed in the liquid cooling plate 505. A liquid inlet and a liquid outlet that are connected to the liquid cooling pipeline 503 are disposed on an outer wall of the liquid cooling plate 505. A plurality of high-temperature automatic cracking holes 506 are disposed on the liquid cooling pipeline 503.

In this embodiment, when a surface temperature of the liquid cooling plate 505 is greater than or equal to a first set threshold, the high-temperature automatic cracking hole 506 automatically opens to spray the coolant to the battery module. For example, when the surface temperature of the liquid cooling plate 505 reaches 200°C, the high-temperature automatic cracking hole 506 automatically opens to spray the coolant to the battery module.

It can be learned that when thermal runaway or the like occurs in the battery box, and consequently the surface temperature of the liquid cooling plate exceeds the set threshold, the high-temperature automatic cracking hole on the liquid cooling pipeline automatically cracks at a high temperature, and the coolant in the liquid cooling pipeline is sprayed from the high-temperature automatic cracking hole to the battery module. Therefore, the battery module may be cooled in time to suppress a thermal runaway process and prevent the battery module from reburning, and a flame may be suppressed to some extent.

Further, a projection, in a thickness direction of the liquid cooling plate 505, of at least a part of the liquid cooling pipeline 503 on a surface of the liquid cooling plate 505 facing the plurality of battery cells 502 may be located outside a region occupied by the plurality of battery cells 502 on the surface of the liquid cooling plate 505. The plurality of high-temperature automatic cracking holes 506 may be disposed on this part of the liquid cooling pipeline 503.

In addition, a projection, in a thickness direction of the liquid cooling plate 505, of at least a part of the liquid cooling pipeline 503 on a surface of the liquid cooling plate 505 facing the plurality of battery cells 502 may be located in a region occupied by the plurality of battery cells 502 on the surface of the liquid cooling plate 505.

The coolant flows in from the liquid inlet of the liquid cooling pipeline 503, and flows out from the liquid outlet of the liquid cooling pipeline 503. When the battery module works normally, for example, when a surface temperature of the battery module does not exceed 100°C, the coolant may flow into the battery module through the liquid cooling pipeline disposed in the liquid cooling plate, to cool the battery module, so as to ensure that the temperature of the battery module is within a specific range. The liquid cooling plate may be made of aluminum with excellent heat conduction performance. In another embodiment of this application, the liquid cooling plate may be made of aluminum, copper, iron, or stainless steel. Therefore, when thermal runaway does not occur in the battery box, the liquid cooling apparatus may cool the battery module.

For example, the coolant is perfluorohexanone.

Further, the battery box 501 may further include a controller, a first sensor, and a spraying apparatus 507 and an extinguishing agent pipeline 504 that are located above the battery module. As described above, the battery module may include the plurality of battery cells 502. The controller is electrically connected to the first sensor (not shown in the figure) and the spraying apparatus 507. The spraying apparatus 507 is connected to one end of the extinguishing agent pipeline 504. For example, the other end of the extinguishing agent pipeline 504 is further connected to an apparatus for storing an extinguishing agent. The extinguishing agent pipeline 504 may deliver, to the spraying apparatus 507, the extinguishing agent from the apparatus for storing the extinguishing agent. For example, the spraying apparatus 507 may be in any shape such as an umbrella-shaped nozzle. A shape of the spraying apparatus 507 is not limited in this embodiment of this application.

When thermal runaway occurs in the battery box 501, the foregoing explosion-proof valve 111 is opened, and a large amount of flammable gas is ejected from a cavity of the battery cell 502, causing a temperature rise inside the battery box 501. The first sensor is configured to detect a temperature of the battery box 501, and send a first electrical signal to the controller. For example, the first sensor is located above the battery module, and is configured to detect a temperature at a top of the battery box 501. Generally, when a fire occurs inside the battery box, the temperature at the top of the battery box is high. Therefore, disposing the first sensor above the battery module, that is, the top of the battery box, may accurately detect the temperature of the battery box. The first sensor may be, for example, a temperature sensor.

The controller is configured to: when determining, based on the first electrical signal, that the temperature of the battery box 501 is greater than or equal to the first set threshold, control the spraying apparatus 507 to spray the extinguishing agent to the battery module. The first set threshold may be determined based on an empirical value, an experimental value, or the like. For example, when the first sensor detects that the temperature inside the battery box 501 or at the top of the battery box 501 reaches 400°C, the first sensor sends the first electrical signal to the controller, and the controller may determine that a fire occurs inside the battery box 501. Therefore, the controller controls the spraying apparatus 507 to start to spray the extinguishing agent in the extinguishing agent pipeline 504 to the battery module to extinguish the fire.

For example, a flame detection sensor and a driving apparatus may be further disposed at the top of the battery box 501. The flame detection sensor may be an infrared flame sensor, an ultraviolet flame sensor, an infrared and ultraviolet hybrid flame sensor, or the like. The flame detection sensor is disposed on a posture adjustment base. A drive motor may drive a monitoring angle of the flame detection sensor to be adjusted. For example, the monitoring angle of the flame detection sensor may be 30° to 180°. The flame detection sensor is usually mounted at a middle position or another vacant position at the top of the battery box 501.

For example, the spraying apparatus 507 may also be disposed on a posture adjustment base. A drive motor may drive an angle of the spraying apparatus 507 to be adjusted, so that the spraying apparatus 507 sprays the extinguishing agent to the battery cell 502 in which a fire occurs.

It can be learned that when the temperature inside the battery box 501 exceeds the first set threshold, the fire may be extinguished in time, to avoid spreading of the fire and reduce a loss. In addition, the spraying apparatus 507 for spraying the extinguishing agent is located above the battery module, so that the fire may be extinguished effectively for the battery module.

Further, the battery box 501 may further include a second sensor (not shown in the figure) connected to the controller. The second sensor is configured to send a second electrical signal to the controller when detecting impact force generated by a flammable gas ejected when an explosion-proof valve 111 of at least one battery cell 502 in the battery module is opened. For example, the second sensor may be a piezoelectric ceramic piece.

The controller is further configured to determine, based on the second electrical signal, that thermal runaway occurs in the at least one battery cell 502 in the battery module. Therefore, when thermal runaway occurs in the battery module, the explosion-proof valve on the battery cell in the battery module is opened, and the flammable gas ejected from the explosion-proof valve generates specific impact force. When detecting the impact force, the second sensor may report the impact force to the controller. Therefore, it may be detected in time that thermal runaway occurs in the battery module.

For example, the extinguishing agent may include at least one of the following: heptafluoropropane and perfluorohexanone. The heptafluoropropane is a dry extinguishing agent, so that a further loss of the battery module may be avoided. The perfluorohexanone is a liquid coolant capable of quickly reducing a temperature inside the battery box. A type of the used extinguishing agent is not limited in this embodiment of this application.

In this embodiment, when thermal runaway or the like occurs in the battery box, and consequently the surface temperature of the liquid cooling plate exceeds the set threshold, the high-temperature automatic cracking hole on the liquid cooling pipeline automatically cracks at a high temperature, and the coolant in the liquid cooling pipeline is sprayed from the high-temperature automatic cracking hole to the battery module. Therefore, the battery module may be cooled in time to suppress the thermal runaway process and prevent the battery module from reburning, and the flame may be suppressed to some extent. In addition, the extinguishing agent may be sprayed to extinguish the fire together.

For example, a shape of the battery box mentioned in this embodiment of this application may be a square shape, a circle, or any other shape. The shape of the battery box is not limited in this embodiment of this application.

An embodiment of this application further provides a battery module, including a plurality of battery cells and the foregoing battery box. The plurality of battery cells are separately disposed in a plurality of battery cell slots of the battery box. The battery cell includes two tabs connected to a positive electrode and a negative electrode. The tab is electrically connected to a conductive column.

Specifically, positive and negative tabs are disposed on two sides of the battery cell. The battery cell is mounted in an electrochemical cell slot, and the two tabs are located at two ends of the battery cell slot. The positive and negative tabs are connected to an external conductive bar through the conductive column between cavities. The tab may be connected to the conductive column in a manner of laser welding, ultrasonic welding, electromagnetic welding, or bolt fastening.

An embodiment of this application further provides an energy storage system. The energy storage system includes a converter and the foregoing battery pack. The converter is connected to the battery pack, and is configured to convert a current input to the battery pack or a current output from the battery pack.

The energy storage system is usually used in household energy storage, site energy, an electric vehicle, home energy storage, energy storage of a base station, backup energy storage of a data center, an uninterruptible power supply (uninterruptible power supply, UPS), smart photovoltaic energy storage, an energy storage power plant, or the like.

An embodiment of this application also provides an electric vehicle. The electric vehicle, also referred to as a new energy vehicle, is a kind of electrically-driven vehicle. The electric vehicle includes a motor, wheels, and the foregoing energy storage system electrically connected to the motor.

The energy storage system is a high-capacity and high-power storage battery. The energy storage system may provide electric energy for the motor and/or another component of the electric vehicle. In some examples, the energy storage system may include one or more rechargeable lithium-ion or lead-acid batteries. In addition, the energy storage system may further use other battery materials and configurations, and this is not limited herein. When the electric vehicle travels, the energy storage system may supply power to the motor through a motor control unit (motor control unit, MCU) in a battery management system, and the motor converts the electric energy provided by the energy storage system into mechanical energy, so as to drive the wheels to rotate to implement travel of the electric vehicle.

In embodiments of this application, if there are no special statements and logic conflicts, terms and/or descriptions between different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists. A and B each may be singular or plural. In the text descriptions of this application, the character "/" usually indicates an "or" relationship between associated objects.

It may be understood that various numbers in embodiments of this application are merely used for distinguishing for ease of description, and are not intended to limit the scope of embodiments of this application. The sequence numbers of the foregoing processes do not mean an execution sequence. The execution sequence of the processes should be determined based on functions and internal logic of the processes.

In the foregoing embodiments, descriptions of each embodiment have different focuses. For a marginal part that is not described in detail in an embodiment, refer to related descriptions of other embodiments.

The components in the apparatus in embodiments of this application may be combined, divided, and deleted based on an actual requirement. A person skilled in the art may combine different embodiments or features of different embodiments described in this specification.

In embodiments of this application, if there are no special statements and logic conflicts, terms and/or descriptions between different embodiments are consistent and may be mutually referenced, and technical features in different embodiments may be combined based on an internal logical relationship thereof, to form a new embodiment.

The foregoing embodiments are merely used to describe rather than limit the technical solutions of this application. Although this application is described in detail with reference to the foregoing embodiments, it should be understood that a person of ordinary skill in the art may still make modifications to the technical solutions described in the foregoing embodiments or make equivalent replacements to some technical features thereof, without departing from the scope of the technical solutions of embodiments of this application.

## Claims

1. A battery module, comprising a plurality of battery cells and a battery box(301), the plurality of battery cells are separately disposed in a plurality of battery cell slots of the battery box ;
wherein the battery box comprising a controller, a first sensor (305), and a spraying apparatus (304) and an extinguishing agent pipeline (303) that are located above a battery module, wherein the controller is electrically connected to the first sensor (305) and the spraying apparatus (304), and the spraying apparatus (304) is connected to the extinguishing agent pipeline (303);
the first sensor (305) is configured to detect a temperature of the battery box (301), and send a first electrical signal to the controller; and
the controller is configured to: when determining, based on the first electrical signal, that the temperature of the battery box (301) is greater than or equal to a first set threshold, control the spraying apparatus (304) to spray an extinguishing agent to the battery module.

2. The battery module according to claim 1, wherein the first sensor (305) is located above the battery module, and is configured to detect a temperature at a top of the battery box (301).

3. The battery module according to claim 1 or 2, wherein the battery module comprises a plurality of battery cells (302), and the battery box (301) further comprises a second sensor (306) connected to the controller;
the second sensor (306) is configured to send a second electrical signal to the controller when detecting impact force generated by a flammable gas ejected when an explosion-proof valve (111) of at least one battery cell (302) in the battery module is opened; and
the controller is further configured to determine, based on the second electrical signal, that thermal runaway occurs in the at least one battery cell in the battery module.

4. The battery module according to claim 3, wherein the second sensor (306) is a piezoelectric ceramic piece.

5. The battery module according to any one of claims 1 to 4, wherein the extinguishing agent comprises at least one of the following: heptafluoropropane and perfluorohexanone.

6. A battery module, comprising a plurality of battery cells and a battery box(501), the plurality of battery cells are separately disposed in a plurality of battery cell slots of the battery box ;
wherein the battery box (501), comprising a liquid cooling apparatus located at a bottom of a battery module, wherein the liquid cooling apparatus comprises a liquid cooling plate (505), a liquid cooling pipeline (503) configured to accommodate a coolant is disposed in the liquid cooling plate (505), a liquid inlet and a liquid outlet that are connected to the liquid cooling pipeline (503) are disposed on an outer wall of the liquid cooling plate (505), and a plurality of high-temperature automatic cracking holes (506) are disposed on the liquid cooling pipeline (503); and
when a surface temperature of the liquid cooling plate (505) is greater than or equal to a first set threshold, the high-temperature automatic cracking hole (506) sprays the coolant to the battery module.

7. The battery module according to claim 6, wherein the battery module comprises a plurality of battery cells (502), the plurality of battery cells (502) are located on an upper surface of the liquid cooling plate (505), and a projection, in a thickness direction of the liquid cooling plate (505), of at least a part of the liquid cooling pipeline (503) on a surface of the liquid cooling plate (505) facing the plurality of battery cells (502) is located outside a region occupied by the plurality of battery cells (502) on the surface of the liquid cooling plate (505); and
the coolant flows in from the liquid inlet of the liquid cooling pipeline (503), and flows out from the liquid outlet of the liquid cooling pipeline (503).

8. The battery module according to claim 6 or 7, wherein the coolant is perfluorohexanone.

9. The battery module according to any one of claims 6 to 8, wherein the battery box (501) further comprises a controller, a first sensor, and a spraying apparatus (507) and an extinguishing agent pipeline (504) that are located above the battery module, the controller is electrically connected to the first sensor and the spraying apparatus (507), and the spraying apparatus (507) is connected to the extinguishing agent pipeline (504);
the first sensor is configured to detect a temperature of the battery box (501), and send a first electrical signal to the controller; and
the controller is configured to: when determining, based on the first electrical signal, that the temperature of the battery box (501) is greater than or equal to a second set threshold, control the spraying apparatus (507) to spray an extinguishing agent to the battery module.

10. The battery module according to claim 9, wherein the first sensor is located above the battery module, and is configured to detect a temperature at a top of the battery box (501).

11. The battery module according to claim 9 or 10, wherein the battery module comprises the plurality of battery cells (502), and the battery box (501) further comprises a second sensor connected to the controller;
the second sensor is configured to send a second electrical signal to the controller when detecting impact force generated by a flammable gas ejected when an explosion-proof valve (111) of at least one battery cell (502) in the battery module is opened; and
the controller is further configured to determine, based on the second electrical signal, that thermal runaway occurs in the at least one battery cell in the battery module.

12. The battery module according to claim 11, wherein the second sensor is a piezoelectric ceramic piece.

13. The battery module according to any one of claims 9 to 12, wherein the extinguishing agent comprises at least one of the following: heptafluoropropane and perfluorohexanone.

14. An energy storage system, comprising a converter and at least one battery module according to any one of claims 1 to 13, wherein the converter is connected to the battery module, and is configured to convert a current input to the battery module or a current output from the battery module.
